# EUROPÄISCHE PATENTANMELDUNG

(11) **EP 2 658 066 A1**
(43) Veröffentlichungstag der Anmeldung: **30.10.2013**
(21) Anmeldenummer: 12185740.3
(22) Anmeldetag: 24.09.2012
(51) Int. Cl.: H02H 9/04

(54) **Vorrrichtung zum Nachweis von Überspannung**

(30) Priorität: 26.04.2012 DE 102012103702
(71) Anmelder: Technischer Vor Ort Service OHG, 30165 Hannover (DE)
(72) Erfinder: Wirth, Hartmut, 30165 Hannover (DE); Schulz, Andy, 30165 Hannover (DE)
(74) Vertreter: Taruttis, Stefan Georg

(57) **Zusammenfassung**

Die vorliegende Erfindung betrifft eine Vorrichtung und ein Verfahren zum Nachweis von Überspannung. Die Vorrichtung zeichnet sich dadurch aus, dass sie Spannungsindikatoren (4,7) enthält, die eingerichtet sind, nur oberhalb einer vorbestimmten Grenzspannung durchlässig zu sein und sich bei Durchgang irreversibel zu verändern. Entsprechend erlaubt eine Analyse der Spannungsindikatoren in einem Verfahren zum Nachweis von Überspannung einen Nachweis des Durchgangs bei oberhalb eines vorbestimmten Grenzwertes liegender Spannung.

## Beschreibung

### Vorrichtung zum Nachweis von Überspannung

Die vorliegende Erfindung betrifft eine Vorrichtung und ein Verfahren zum Nachweis von Überspannung. Die Vorrichtung weist zumindest einen spannungsführenden Leiter und zumindest einen nichtspannungsfiihrenden Leiter auf, wobei der zumindest eine spannungsfiihrende Leiter mit einem ersten Spannungsindikator verbunden ist, der eingerichtet ist, erst ab Erreichen einer vorbestimmten Grenzspannung durchlässig für Spannung zu sein.

### Stand der Technik

Es ist bekannt, technische Geräte zum Schutz vor Überspannungen durch Überspannungsableiter zu schützen. Die DE 38 34 868 A1 beschreibt Überspannungsableiter, die bei Auftreten einer Überspannung in einer Leitung leitend werden, sodass die anliegende Spannung reduziert und Schaden an dem zu schützenden Gerät vermieden wird.

Des Weiteren ist es zur Vermeidung von Überspannungsschäden aus der DE 197 22 580 C1 bekannt, Schutzstecker mit einem spannungsbegrenzenden Bauelement auszustatten, an dem ein Schmelzelement angeordnet ist. Im Falle einer Überspannung schmilzt das Schmelzelement und löst eine Sicherung aus, die die Überspannung in die Erde ableitet.

Die US 2005/0180080 A1 beschreibt eine Vorrichtung zum Schutz vor Überspannung, bei der ein am Ausgang einer Leitung angeordnetes technisches Gerät bei Auftreten einer Überspannung durch ein vorgeschaltetes Isolationselement geschützt wird, wobei die Überspannung nach Durchtritt durch einen Überspannungsableiter geerdet wird.

### Aufgabe der Erfindung

Es ist die Aufgabe der vorliegenden Erfindung, eine alternative Vorrichtung zum Nachweis von Überspannung bereitzustellen, die sich bei Durchtreten einer oberhalb einer vorbestimmten Grenzspannung liegenden Spannung durch einen Leiter irreversibel verändert und dadurch das Überschreiten der Grenzspannung in dem Leiter anzeigt. Eine weitere Aufgabe der vorliegenden Erfindung ist es, ein alternatives Verfahren zum Nachweis von Überspannung bereitzustellen, das durch Analyse zumindest eines Bauelementes einer Vorrichtung eine Beurteilung erlaubt, ob eine durch einen mit diesem Bauelement verbundenen Leiter hindurchgetretene Spannung einen vorbestimmten Grenzwert überschritten hat.

### Allgemeine Beschreibung der Erfindung

Die Erfindung löst diese Aufgaben durch Bereitstellung einer Vorrichtung und eines Verfahrens mit den Merkmalen der Ansprüche, insbesondere durch Bereitstellen einer Vorrichtung mit mindestens einem spannungsfiihrenden Leiter und zumindest einem nichtspannungsführenden Leiter, bei der ein erster Spannungsindikator parallel zu dem zumindest einen spannungsführenden Leiter geschaltet und mit dem nichtspannungsfiihrenden Leiter verbunden ist. Insbesondere kann die Vorrichtung aus den Elementen der Ansprüche bestehen. Der nichtspannungsfiihrende Leiter kann insbesondere ein Nullleiter oder eine Erdung sein. Bevorzugt sind der zumindest eine spannungsführende Leiter und der nichtspannungsführende Leiter in einem Gehäuse angeordnet, wobei das Gehäuse für jeden Leiter einen von außen zugänglichen Eingang und einen Ausgang aufweist. Entsprechend weist der spannungsführende Leiter an seinem ersten Ende einen Eingang und an seinem zweiten Ende einen Ausgang auf und ist zwischen diesen mit einem Eingang des ersten Spannungsindikators verbunden, dessen Ausgang mit dem nichtspannungsführenden Leiter verbunden ist. Entsprechend weist auch der nichtspannungsführende Leiter an seinem ersten Ende einen Eingang und an seinem zweiten Ende einen Ausgang auf. Für den Fall, dass der nichtspannungsführende Leiter ein Nullleiter ist, ist dieser bevorzugt zwischen seinem Eingang und seinem Ausgang mit dem Eingang eines zweiten Spannungsindikators verbunden, wobei der zweite Spannungsindikator dem Nullleiter parallelgeschaltet ist und sein Ausgang mit dem spannungsführenden Leiter oder einer Erdung verbunden ist.

Bevorzugt sind die Leiter und die Spannungsindikatoren von einem Gehäuse umfasst, das bevorzugt versiegelt ist, optional überdecken die Eingänge und die Ausgänge des spannungsführenden Leiters und des nichtspannungsführenden Leiters die Öffnungen des Gehäuses.

Für die Zwecke der Erfindung sind Spannungsindikatoren elektrische Bauelemente, die eingerichtet sind, erst ab dem Erreichen einer vorbestimmten Grenzspannung elektrisch leitend zu sein und bei oder unterhalb der vorbestimmten Grenzspannung nicht durchlässig für Spannung zu sein. Die Spannungsindikatoren sind eingerichtet, sich bei Durchtritt von Spannung in zumindest einer Eigenschaft, z.B. einer optischen, physikalischen oder chemischen Eigenschaft, irreversibel zu verändern und dadurch den Durchtritt von Spannung anzuzeigen, beispielsweise indem sie bei Durchtritt von Spannung ihre Form und/oder Farbe und/oder eine Materialeigenschaft ändern. Weiterhin sind Spannungsindikatoren vorzugsweise eingerichtet, eine oberhalb der vorbestimmten Grenzspannung liegende Spannung bei Durchtritt durch den Spannungsindikator zu reduzieren, insbesondere sind Spannungsindikatoren eingerichtet, bei einer oberhalb der Grenzspannung anliegenden Spannung eine geringe Spannung zu leiten, z.B. eine am Ausgang anliegende Spannung im Bereich von < 20 V zu erzeugen, wenn die am Eingang des Spannungsindikators anliegende Grenzspannung > 650 V ist. Ein erfindungsgemäßer Spannungsindikator kann beispielsweise ein Gasableiter (auch als Gasentladungsröhre bezeichnet) oder ein Halbleiterelement sein.

Erfindungsgemäß bildet jeder Leiter, z.B. jeder des zumindest einen spannungsführenden Leiters und jeder Nullleiter und jede Erdung, jeweils zwischen Eingang und Ausgang eine durchgängige Verbindung, an der bevorzugt jeweils ein Spannungsindikator mit seinem Eingang angeschlossen ist, wobei der Spannungsindikator mit seinem Ausgang mit einem anderen der Leiter verbunden ist. Vorzugsweise ist ein erster Spannungsindikator, der parallel zu einem spannungsführenden Leiter geschaltet ist, mit seinem Ausgang mit einem Nullleiter oder einer Erdung verbunden und ein zweiter Spannungsindikator, der parallel zu einem Nullleiter geschaltet ist, ist mit seinem Ausgang mit einem spannungsführenden Leiter oder einer Erdung verbunden. Entsprechend ist die erfindungsgemäße Vorrichtung eingerichtet, eine am spannungsführenden Leiter anliegende Spannung unabhängig von ihrem Wert immer von dem Eingang des spannungsführenden Leiters zum Ausgang des spannungsführenden Leiters zu leiten und eine am Nullleiter anliegende Spannung unabhängig von ihrem Wert immer von dem Eingang des Nullleiters zu dem Ausgang des Nullleiters zu leiten.

Es ist bevorzugt, dass die erfindungsgemäße Vorrichtung jeweils eine zu jedem spannungsführenden Leiter parallelgeschaltete Verbindung zwischen dem Eingang des spannungsführenden Leiters und dem Ausgang eines weiteren Leiters, beispielsweise des Nullleiters oder einer Erdung auf, wobei jeder erste Spannungsindikator in dieser Verbindung angeordnet istund an seinem Eingang mit dem spannungsführenden Leiter und an seinem Ausgang jeweils mit einem weiteren Leiter verbunden ist, insbesondere mit jeweils einem nichtspannungsführenden Leiter. Die erfindungsgemäße Vorrichtung ist daher eingerichtet, bei Anliegen einer oberhalb eines vorbestimmten Grenzwertes liegenden Spannung an dem spannungsführenden Leiter die Spannung nicht nur durch den spannungsführenden Leiter, sondern auch durch den zum spannungsführenden Leiter parallelgeschalteten ersten Spannungsindikator zu leiten.

Die zum Nullleiter parallelgeschaltete Verbindung mit dem darin angeordneten zweiten Spannungsindikator führt bei Anliegen einer oberhalb des vorbestimmten Grenzwertes liegenden Spannung an dem Nullleiter die Spannung durch den zu dem Nullleiter parallelgeschalteten zweiten Spannungsindikator, wobei der Nullleiter selbst ebenfalls diese Spannung unverändert durchleitet.

Eine am Eingang des spannungsführenden Leiters anliegende Spannung oberhalb des vorbestimmten Grenzwerts nimmt in der parallelgeschalteten Verbindung aufgrund der Anordnung des spannungsführenden Leiters und dem zu dem spannungsführenden Leiter parallelgeschalteten ersten Spannungsindikator, der mit seinem dem spannungsführenden Leiter gegenüberliegenden Ausgang mit einem nichtspannungsführenden Leiter verbunden ist, durch die Parallelschaltung zum spannungsführenden Leiter den gleichen Wert an. Daher ist die Vorrichtung eingerichtet, durch irreversible Veränderung des ersten Spannungsindikators das Überschreiten einer vorbestimmten Grenzspannung in dem spannungsführenden Leiter anzuzeigen. Entsprechend erzeugt auch eine am Nullleiter anliegende Spannung oberhalb des vorbestimmten Grenzwerts in dem zu diesem parallelgeschalteten zweiten Spannungsindikator eine nachweisbare irreversible Veränderung.

Es ist daher ein Vorteil der erfindungsgemäßen Vorrichtung, dass durch die Parallelschaltung eines erst oberhalb einer vorbestimmten Grenzspannung für Spannung durchlässigen Spannungsindikators zu einem Leiter durch eine irreversible Veränderung des Spannungsindikators das Überschreiten der Grenzspannung in diesem Leiter anzeigt wird bzw. durch das Ausbleiben der Veränderung des Spannungsindikators angezeigt wird, dass in diesem Leiter die vorbestimmte Grenzspannung nicht überschritten wurde. Auf diese Weise ermöglicht die Analyse nur eines Bauteils, nämlich des Spannungsindikators, eine einfache und zuverlässige Aussage darüber, ob ein an dem zum Spannungsindikator parallelgeschalteten Leiter angeschlossenes Gerät eine oberhalb der Grenzspannung liegende Spannungsspitze erhielt und z.B. durch eine oberhalb der Grenzspannung liegende Spannung geschädigt wurde. Es ist daher im Rahmen der Suche einer Ursache für den Defekt eines an der erfindungsgemäßen Vorrichtung angeschlossenen technischen Gerätes nicht notwendig, den Leiter selbst vollständig und/oder das an dem Leiter angeschlossene Gerät zu analysieren, um beurteilen zu können, ob die Ursache des Defektes im Überschreiten der Grenzspannung in einem der Leiter lag oder nicht.

Weiterhin erlaubt die Erfindung auf einfache Weise eine Aussage darüber, in welchem Leiter der Vorrichtung die vorbestimmte Grenzspannung überschritten wurde, da bevorzugt jedem Leiter, insbesondere jedem spannungsführenden Leiter und dem Nullleiter, ein Spannungsindikator parallelgeschaltet ist, der das Überschreiten der Grenzspannung ausschließlich in diesem Leiter und unabhängig von den weiteren Leitern der Vorrichtung anzeigt.

Weiter vorteilhaft ist die Manipulationssicherheit der Vorrichtung, die insbesondere in Ausführungsformen sichergestellt ist, in denen die Leiter sowie die parallelgeschalteten Spannungsindikatoren in einem geschlossenen und versiegelten Gehäuse angeordnet sind, wobei vorzugsweise die Eingänge und die Ausgänge der Leiter die einzigen Öffnungen des Gehäuses bilden. Es ist daher bevorzugt bei Verwendung der Vorrichtung durch Anordnung in einer Leitung, an der ein technisches Gerät angeschlossen ist, möglich, das einmalige Anliegen einer Spannung oberhalb der Grenzspannung anhand der irreversiblen Veränderung eines Spannungsindikators nachzuweisen. Hingegen ist es bei Anordnung der Vorrichtung in einer Leitung, an der ein Gerät anschlossen ist, nicht möglich, durch Manipulation des Gerätes den Eindruck der Einwirkung einer sehr hohen Spannung, wie z.B. durch einen Blitzeinschlag, zu erwecken, obwohl eine Kurzschlussspannung mit weitaus geringerer Spannungsamplitude den Defekt des Gerätes verursacht hat. Denn der Nachweis einer Überspannung oberhalb der Grenzspannung kann nur durch Feststellen des Durchtritts von Spannung durch den Spannungsindikator erfolgen, wobei der Spannungsindikator aufgrund der Anordnung in dem Gehäuse von außen nicht zugänglich und daher nicht manipulierbar ist.

Insbesondere erlaubt die Vorrichtung durch die Einstellung der Grenzspannung, ab deren Überschreiten die Spannungsindikatoren zu einer irreversiblen Veränderung eingerichtet sind, eine Differenzierung zwischen dem Auftreten einer Überspannung, die oberhalb der Grenzspannung liegt, z.B. oberhalb einer Grenzspannung von 650 V, die infolge eines Blitzschlags überschritten wird, und dem Auftreten einer Spannungsspitze unterhalb der Grenzspannung, wie sie z.B. durch Kurzschlussüberspannung verursacht wird, für jeden einzelnen Leiter.

Erfindungsgemäß sind der zumindest eine erste und der zweite Spannungsindikator eingerichtet, erst ab dem Erreichen einer Grenzspannung, die insbesondere im Bereich zwischen 500 und 800 V, bevorzugt zwischen 600 und 700 V, und besonders bevorzugt auf 650 V eingestellt ist, für Spannung durchlässig zu sein. Kurzschlussüberspannungen erreichen eine maximale Spannungsamplitude von < 650 V, sodass für den Fall, dass der erste Spannungsindikator eingerichtet ist, erst oberhalb einer Grenzspannung von 650 V elektrisch leitend zu sein, eine mit dem Durchtritt von Spannung einhergehende Veränderung einer Eigenschaft des Spannungsindikators den Durchtritt einer blitzbedingten Überspannung in dem parallelgeschalteten Leiter anzeigt.

In einer einfachen Ausführungsform weist eine erfindungsgemäße Vorrichtung auf oder besteht aus zumindest einem spannungsführenden Leiter und zumindest einem nichtspannungsführenden Leiter, wobei der spannungsführende Leiter an seinem ersten Ende einen Eingang und an seinem gegenüberliegenden zweiten Ende einen Ausgang aufweist, wobei der spannungsführende Leiter mit einem parallelgeschalteten ersten Spannungsindikator verbunden ist, dessen Ausgang mit dem nichtspannungsführenden Leiter verbunden ist, und wobei der erste Spannungsindikator eingerichtet ist, erst oberhalb einer vorbestimmten Grenzspannung elektrisch zu leiten und sich bei Anliegen einer Spannung oberhalb der Grenzspannung in zumindest einer Eigenschaft irreversibel zu verändern, bzw. unterhalb der Grenzspannung zu sperren. Es ist daher ein weiterer Vorteil der erfindungsgemäßen Vorrichtung, dass diese aus nur wenigen Bauteilen bestehen kann, und insbesondere zusätzlich zu einem Spannungsindikator keinen Spannungssensor aufweist, der eingerichtet ist, bei Detektieren einer Überspannung die Leitung in einem spannungsführenden Leiter durch eine Sicherung oder ein geeignetes zusätzliches Bauteil zu unterbrechen. Entsprechend ist die erfindungsgemäße Vorrichtung auch kostengünstiger als z.B. Vorrichtungen, die zusätzlich zu einem Spannungsindikator einen Spannungssensor und eine in dem spannungsführenden Leiter angeordnete Sicherung aufweisen.

In Ausführungsformen, in denen die Vorrichtung zusätzlich zu dem zumindest einen spannungsführenden Leiter zwei nichtspannungsführende Leiter aufweist, von denen einer ein Nullleiter und der andere eine Erdung ist, kann der Ausgang des ersten Spannungsindikators mit dem Nullleiter und/oder mit der Erdung verbunden sein. Der Ausgang des optionalen dem Nullleiter parallelgeschalteten zweiten Spannungsindikators kann mit dem spannungsführenden Leiter und/oder mit der Erdung verbunden sein.

Optional weist die Vorrichtung einen oder zwei weitere spannungsführende Leiter auf, die wie mit Bezug auf den zumindest einen spannungsführenden Leiter beschrieben jeweils einen parallelgeschalteten ersten Spannungsindikator aufweisen, dessen Ausgang mit einem der anderen Leiter, beispielsweise dem Nullleiter oder der Erdung verbunden ist.

In einer bevorzugten Ausführungsform weist die Vorrichtung zumindest eine am Ausgang jedes Spannungsindikators angeschlossene Sicherung auf. Eine solche Sicherung, die zumindest einem Spannungsindikator, beispielsweise jedem ersten Spannungsindikator und/oder jedem zweiten Spannungsindikator, nachgeschaltet ist, ist zwischen dem Ausgang jedes Spannungsindikators und dem daran angeschlossenen Leiter angeordnet.

Dabei kann jedem Spannungsindikator jeweils eine Sicherung nachgeschaltet sein, sodass insbesondere die Vorrichtung dieselbe Anzahl Spannungsindikatoren wie Sicherungen aufweist. Die Sicherung ist eingerichtet, bei Anliegen von Spannung zu unterbrechen, insbesondere bei Anliegen einer Spannung, die nach Eintritt einer oberhalb der Grenzspannung liegenden Spannung in einen Spannungsindikator am Ausgang des Spannungsindikators anliegt.

Alternativ kann eine Vorrichtung mehrere Leiter mit jeweils einem parallelgeschalteten Spannungsindikator aufweisen, wobei die Ausgänge aller Spannungsindikatoren mit nur einer gemeinsamen Sicherung verbunden sind. Dabei ist diese Sicherung gegenüber den Spannungsindikatoren vorzugsweise mit einer Erdung verbunden.

Es ist bevorzugt, dass alle Leiter der Vorrichtung, insbesondere der zumindest eine spannungsführende Leiter, der Nullleiter und/oder die Erdung mit ihren jeweils parallelgeschalteten Spannungsindikatoren in einem versiegelten Gehäuse angeordnet sind und jeweils nur der Eingang und der Ausgang jedes Leiters von außen zugänglich sind und vorzugsweise die einzigen Öffnungen des Gehäuses überdecken.

In einer bevorzugten Ausführungsform weist die Vorrichtung eine Einrichtung zur Datenübermittlung auf, wobei die Einrichtung zur Datenübermittlung ausschließlich mit Leitern verbunden ist, die einen Spannungsindikator aufweisen, und wobei die Spannungsindikatoren der Einrichtung zur Datenübermittlung vorgeschaltet sind. An ihrem Eingang ist die Einrichtung zur Datenübermittlung daher ausschließlich mit dem Ausgang eines Spannungsindikators oder mit den Ausgängen mehrerer Spannungsindikatoren verbunden, sodass die Einrichtung zur Datenübermittlung nur dann ein Signal erhält, wenn in einem oder mehreren der mit Spannungsindikatoren verbundenen Leitern die vorbestimmte Grenzspannung überschritten wurde. Die Einrichtung zur Datenübermittlung ist eingerichtet, bei Detektion einer Spannung ein erstes Signal an einen Empfänger zu übermitteln, das das Auftreten von Überspannung in zumindest einem Leiter anzeigt und das weiterhin ein Identifikationsmerkmal der Vorrichtung, insbesondere eine Seriennummer, enthält. Für die Datenübermittlung weist die Einrichtung zur Datenübermittlung daher einen Sender auf. Weiterhin weist die Einrichtung zur Datenübermittlung einen Speicher auf, in dem das Identifikationsmerkmal gespeichert ist. Da die Einrichtung zur Datenübermittlung aufgrund ihrer Anordnung nur einen Spannungsimpuls erhalten kann, wenn in zumindest einem Leiter der Vorrichtung eine vorbestimmte Grenzspannung überschritten wurde und der diesem Leiter parallelgeschaltete und der Einrichtung zur Datenübermittlung vorgeschaltete Spannungsindikator durchlässig für Spannung wurde, zeigt das Auslösen der Einrichtung zur Datenübermittlung, d.h. das Senden des ersten Signals an einen Empfänger das Überschreiten der vorbestimmten Grenzspannung in zumindest einem Leiter der Vorrichtung an. In bevorzugter Ausführungsform ist der Sender der Einrichtung zur Datenübermittlung ein Funksender, der eingerichtet ist, bei Detektion eines Spannungsimpulses durch die Einrichtung zur Datenübermittlung ein Funksignal, beispielsweise ein UMTS-Signal oder ein Bluetooth-Signal, an einen Empfänger zu senden. Alternativ kann der Sender auch ein SMS-Sender oder ein auf einen anderen Übertragungsstandard eingerichteter Sender sein.

In dieser Ausführungsform weist die Vorrichtung bevorzugt weiterhin eine Einrichtung zur Positionsbestimmung auf. Dabei kann die Einrichtung zur Positionsbestimmung Bestandteil der Einrichtung zur Datenübermittlung sein oder alternativ mit dieser verbunden sein, wobei sie im letzteren Fall ausschließlich mit Leitern verbunden ist, die einen Spannungsindikator aufweisen, der der Einrichtung zur Positionsbestimmung vorgeschaltet ist. Die Einrichtung zur Positionsbestimmung weist einen Standortanzeiger auf, der eingerichtet ist, den aktuellen Standort der Vorrichtung zu ermitteln. Der Standortanzeiger kann beispielsweise ein GPS-Empfänger oder ein Galileo-Empfänger sein. Weiterhin weist die Einrichtung zur Positionsbestimmung einen Sender auf, der eingerichtet ist, bei Detektion einer Spannung und/oder bei Auslösen der Einrichtung zur Datenübermittlung ein zweites Signal an einen Empfänger zu senden, das den aktuellen Standort der Vorrichtung und den Zeitpunkt des Auslösens der Einrichtung zur Positionsbestimmung enthält. Der Sender kann beispielsweise ein SMS-Sender, ein Bluetooth-Sender oder ein auf einen anderen Übertragungsstandard eingerichteter Funksender sein. Für den Fall, dass die Einrichtung zur Positionsbestimmung ein Bestandteil der Einrichtung zur Datenübermittlung ist, können diese einen gemeinsamen Sender aufweisen. In dieser Ausführungsform wird in Folge der Detektion eines Spannungsimpulses in der Einrichtung zur Datenübermittlung von dem gemeinsamen Sender ein Signal, z.B. ein Funksignal, ein UMTS-Signal, ein SMS-Signal oder ein Bluetooth-Signal gesendet, das zumindest den aktuellen Standort der Vorrichtung enthält. Der Erhalt dieses Signals durch einen Empfänger zeigt daher zum einen an, dass die Einrichtung zur Positionsbestimmung ein Spannungssignal empfangen hat, was nur auf eine Überspannung in einem parallelgeschalteten Leiter zurückzuführen ist, zum anderen wird der aktuelle Standort der Vorrichtung übermittelt, bevorzugt in einem Signal, das die Daten zur Positionsbestimmung und die Daten über die Detektion eines Spannungsimpulses vereint, insbesondere diese Daten verschlüsselt kombiniert enthält.

Die Einrichtung zur Datenübermittlung und/oder die Einrichtung zur Positionsbestimmung weisen bevorzugt jeweils eine Energieversorgung auf, wobei die Energieversorgung eine unabhängige Energieversorgung, insbesondere eine Batterie, sein kann. Alternativ kann die Energieversorgung auch eine wiederaufladbare Energieversorgung sein, die beispielsweise über eine zwischengeschaltete Sicherung mit einem spannungsführenden Leiter verbunden ist, wobei die Sicherung eingerichtet ist, bei Überschreiten der normalen Netzspannung, beispielsweise bei einer Spannung oberhalb von 230 V zu unterbrechen.

In einer bevorzugten Ausführungsform ist eine erfindungsgemäße Vorrichtung Bestandteil eines Systems, das zusätzlich zu der Vorrichtung eine computergestützte Datenbank aufweist, die zum Empfang von Signalen der Einrichtung zur Datenübermittlung eingerichtet ist. Die computergestützte Datenbank ist eingerichtet, die empfangenen Identifikationsmerkmale gespeicherten Daten zuzuordnen, z.B. durch Identifizieren der Identifikationsmerkmale in der Datenbank und Ausgeben von Daten, die diesen Identifikationsmerkmalen zugeordnet sind. Dabei ist die Vorrichtung mit bzw. aus einem Gehäuse gebildet, in dem zumindest ein spannungsführender Leiter, ein Nullleiter, eine Erdung, zumindest eine Sicherung sowie optional eine Einrichtung zur Datenübermittlung und eine Einrichtung zur Positionsbestimmung angeordnet sind, wobei dem spannungsführenden Leiter und dem Nullleiter jeweils ein Spannungsindikator parallelgeschaltet ist, der eingerichtet ist, erst oberhalb einer vorbestimmten Grenzspannung elektrisch leitend zu sein und sich dabei in zumindest einer Eigenschaft irreversibel zu verändern, und wobei die Einrichtung zur Datenübermittlung, die Einrichtung zur Positionsbestimmung und die zumindest eine Sicherung zumindest einem Spannungsindikator nachgeschaltet sind.

Ein spannungsführender Leiter kann z.B. ein spannungsführender Leiter eines Stromnetzes oder eine Signalübertragungsleitung sein, z.B. eine Antennenleitung oder ein Leiter einer Telefonleitung. Eine erfindungsgemäße Vorrichtung zum Nachweis von Überspannung ist daher insbesondere zur Anordnung an eine Verteilerdose für Netzspannung, an eine Stromversorgung, an einen Telefonanschluss und/oder an einen Antennenanschluss angepasst, z.B. dadurch, dass das Gehäuse passend zu einer Verteilerdose, zu einem Telefonanschluss, bzw. zu einem Antennenanschluss geformt ist und die Eingänge der Leiter passend zu den Kontakten der Verteilerdose, des Telefonanschlusses bzw. des Antennenanschlusses angeordnet sind, während die Ausgänge der Leiter wie die Kontakte der Verteilerdose, des Telefonanschlusses bzw. des Antennenanschlusses angeordnet sind. In dieser Ausführungsform ist die Vorrichtung zur Anordnung zwischen einer Verteilerdose für Netzspannung, einer Anschlussdose für eine Stromversorgung, einem Telefonanschluss und/oder einem Antennenanschluss und dem jeweils passenden Stecker geeignet.

Weiterhin stellt die Erfindung ein Verfahren zum Nachweis einer Überspannung bereit, das die folgenden Schritte aufweist:
- Bereitstellen einer erfindungsgemäßen Vorrichtung,
- Durchtretenlassen von Spannung durch den spannungsführenden Leiter und durch den Nullleiter,
   wobei nur bei Überschreiten der Grenzspannung in einem Leiter der dazu parallelgeschaltete Spannungsindikator irrreversibel verändert wird und bevorzugt eine am Ausgang des Spannungsindikators angeschlossene Sicherung sperrt,
- Bestimmen einer irreversibel veränderbaren Eigenschaft der Spannungsindikatoren, bevorzugt durch optische oder chemische Analyse, und Vergleichen der analysierten Eigenschaft mit der Eigenschaft, die analysierbar ist, wenn keine Spannung durch den Spannungsindikator getreten ist und/oder Vergleichen mit der Eigenschaft, die analysierbar ist, wenn eine Spannung oberhalb der Grenzspannung durch den Spannungsindikator getreten ist,
- Feststellen des Vorliegens oder des Fehlens einer irreversiblen Veränderung zumindest eines Spannungsindikators,
- bevorzugt mit dem Schritt der Bewertung der Feststellung dahingehend, dass das Fehlen einer irreversiblen Veränderung der Eigenschaft zumindest eines Spannungsindikators als Nachweis dafür gewertet wird, dass keine Spannung oberhalb der Grenzspannung durch den Spannungsindikator getreten ist, während das Vorliegen einer irreversiblen Veränderung als Nachweis für einen Durchtritt von Spannung oberhalb der Grenzspannung durch den Spannungsindikator und für das Anliegen einer Spannung oberhalb der vorbestimmten Grenzspannung in dem mit diesem Spannungsindikator parallelgeschalteten Leiter gewertet wird.

Weiter optional weist das Verfahren zum Nachweis von Überspannung den Schritt der Analyse von zumindest einer Sicherung auf, die zumindest einem der Spannungsindikatoren nachgeschaltet war. Die Analyse einer Sicherung schließt dabei insbesondere das Feststellen einer Unterbrechung in dem Schaltkreis an der Position der Sicherung ein, wobei eine Unterbrechung des Schaltkreises an der Position der Sicherung als weiterer Nachweis für den Durchtritt einer Spannung oberhalb des vorbestimmten Grenzwertes in einem vorgeschalteten Spannungsindikator und für das Durchtreten einer oberhalb des vorbestimmten Grenzwertes liegenden Spannung durch den dem Spannungsindikator parallelgeschalteten Leiter bewertet wird. Ist der Schaltkreis an der Position der Sicherung dagegen nicht unterbrochen, wird dies als Nachweis dafür gewertet, dass an dem vorgeschalteten Spannungsindikator keine Spannung oberhalb der Grenzspannung angelegen hat und entsprechend auch keine oberhalb der Grenzspannung liegende Spannung durch den parallelgeschalteten Leiter hindurchgetreten ist.

Optional weist ein erfindungsgemäßes Verfahren zum Nachweis einer Überspannung den Schritt des Analysierens eines defekten Gerätes, des Analysierens des mit diesem Gerät parallelgeschalteten Spannungsindikators und des anschließenden Vergleichs beider Analysenergebnisse auf. Der Vergleich der Analysenergebnisse erlaubt dabei insbesondere einen Nachweis, ob das defekte Gerät mit einer oberhalb der Grenzspannung liegenden Spannung kontaktiert worden ist. Dies ist dann der Fall, wenn einerseits das technische Gerät defekt ist, insbesondere für das Anliegen einer Überspannung charakteristische Schäden aufweist, und andererseits der Spannungsindikator durch Vorliegen einer irreversiblen Veränderung anzeigt, dass eine oberhalb der Grenzspannung liegende Spannung hindurchgetreten ist. Andernfalls erlauben ein defektes Gerät und ein Spannungsindikator ohne irreversible Veränderung den Nachweis, dass das Gerät nicht mit Spannung oberhalb der vorbestimmten Grenzspannung kontaktiert wurde.

In einer bevorzugten Ausführungsform weist das Verfahren zum Nachweis von Überspannung zusätzlich den Schritt des Detektierens einer Spannung durch eine Einrichtung zur Datenübermittlung und den nachfolgenden Schritt des Sendens eines ersten Signals durch einen Sender der Einrichtung zur Datenübermittlung an einen Empfänger auf, wobei das Signal ein Nachweis von Durchtritt von Spannung oberhalb der vorbestimmten Grenzspannung durch einen vorgeschalteten Spannungsindikator und durch einen mit diesem Spannungsindikator verbundenen Leiter ist. Der Sender kann dabei insbesondere ein SMS-Sender, ein Bluetooth-Sender oder ein Funksender sein, der für einen anderen Übertragungsstandard eingerichtet ist, z.B. für UMTS. Weiterhin weist das Verfahren einen Schritt des Abrufens von Identifikationsmerkmalen der Vorrichtung aus einem Speicher der Einrichtung zur Datenübermittlung auf, wobei ein Identifikationsmerkmal insbesondere eine Seriennummer der Vorrichtung sein kann. In dieser Ausführungsform ist es bevorzugt, dass das Verfahren einen Schritt des Sendens eines ersten Signals aufweist, wobei das Signal das Identifikationsmerkmal enthält und gleichzeitig das Überschreiten der Grenzspannung in einem vorgeschalteten Leiter anzeigt.

Bevorzugt weist das Verfahren weiterhin einen Schritt der Positionsbestimmung durch einen Standortanzeiger einer Einrichtung zur Positionsbestimmung und einen Schritt des Sendens eines zweiten Signals durch einen Sender der Einrichtung zur Positionsbestimmung an einen Empfänger auf, wobei das Signal insbesondere Informationen zum Standort der Vorrichtung zum Zeitpunkt des Detektierens von Spannung enthält. Der Standortanzeiger kann dabei insbesondere ein GPS-Empfänger oder ein Galileo-Empfänger sein, der Sender kann insbesondere ein SMS-Sender, ein Bluetooth-Sender oder ein Funksender sein.

Optional kann ein Verfahren zum Nachweis von Überspannung weiterhin einen Schritt des Abrufens von Daten aus einer computergestützten Datenbank durch einen Empfänger und des Zuordnens der Daten zu den mit dem ersten Signal gesendeten Identifikationsmerkmalen aufweisen. Bevorzugt kann es sich bei den aus der computergestützten Datenbank abgerufenen Daten um Daten eines bestimmten Versicherungsnehmers handeln, wobei der Empfänger, der die Daten abruft, insbesondere ein Versicherer sein kann. Bevorzugt erfolgt der Schritt des Abrufens von Daten aus der computergestützten Datenbank automatisiert, nachdem der Empfänger das erste und das zweite Signal von der Einrichtung zur Datenübermittlung und der Einrichtung zur Positionsbestimmung erhalten hat. Auf diese Weise erlaubt ein Verfahren zum Nachweis von Überspannung daher eine schnelle Zuordnung, durch welche Vorrichtung zu welchem Zeitpunkt an welchem Standort eine oberhalb der vorbestimmten Grenzspannung liegende Spannung hindurchgetreten ist.

Für die Zwecke der Erfindung gilt generell die Beschreibung der Schritte des Verfahrens auch als Beschreibung der Vorrichtung, die zur Durchführung des Verfahrens eingerichtet ist. Entsprechend gilt die Beschreibung von Vorrichtungsmerkmalen generell auch als Beschreibung von Verfahrensschritten, zu deren Durchführung die Vorrichtung eingerichtet ist.

### Genaue Beschreibung der Erfindung

Die Erfindung wird nun genauer anhand von Beispielen und mit Bezug auf die Figuren beschrieben, in denen schematisch
- Fig. 1 eine einfache Ausführungsform einer Vorrichtung zum Nachweis von Überspannung zeigt,
- Fig. 2 eine weitere Ausführungsform einer Vorrichtung zum Nachweis von Überspannung zeigt, und
- Fig. 3 eine weitere Ausführungsform einer Vorrichtung als System zum Nachweis von Überspannung mit einer computergestützten Datenbank und einem Empfänger zeigt.

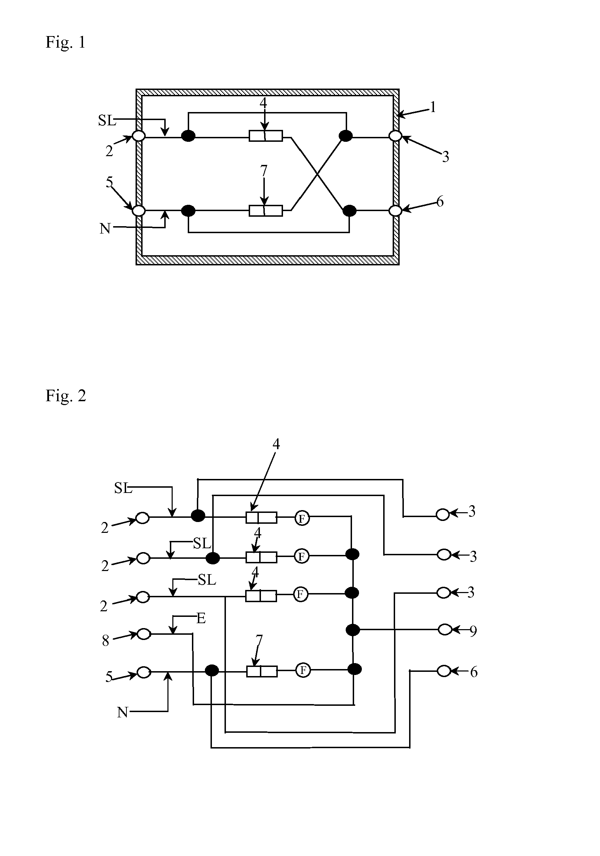

Die Fig. 1 zeigt eine einfache Ausführungsform einer Vorrichtung zum Nachweis von Überspannung, in der die Vorrichtung einen spannungsführenden Leiter SL und einen nichtspannungsführenden Leiter NL aufweist, der ein Nullleiter ist. Der spannungsführende Leiter SL hat an seinem ersten Ende einen Eingang 2 und an seinem gegenüberliegenden Ende einen Ausgang 3. Weiterhin ist dem spannungsführenden Leiter SL ein erster Spannungsindikator 4 parallelgeschaltet, der eingerichtet ist, nur oberhalb einer vorbestimmten Grenzspannung durchlässig für Spannung zu sein. An seinem Ausgang ist der erste Spannungsindikator 4 mit dem Nullleiter N verbunden.

Der Nullleiter N weist an seinem ersten Ende einen Eingang 5 und an seinem gegenüberliegenden zweiten Ende einen Ausgang 6 auf. Weiterhin ist dem Nullleiter N ein zweiter Spannungsindikator 7 parallelgeschaltet, der eingerichtet ist, erst oberhalb einer vorbestimmten Grenzspannung durchlässig für Spannung zu sein. An seinem Ausgang ist der zweite Spannungsindikator 7 mit dem spannungsführenden Leiter SL verbunden.

Der spannungsführende Leiter SL und der Nullleiter N sind mit ihren Eingängen 2, 5 und mit ihren Ausgängen 3, 6 sowie mit ihren jeweils parallelgeschalteten Spannungsindikatoren 4, 7 in einem Gehäuse 1 angeordnet, wobei die Eingänge 2, 5 und die Ausgänge 3, 6 des spannungsführenden Leiters und des Nullleiters die einzigen Öffnungen des Gehäuses überdecken.

Die Fig. 2 zeigt eine weitere Ausführungsform einer Vorrichtung zum Nachweis von Überspannung. Die Vorrichtung weist drei spannungsführende Leiter SL auf, die jeweils an ihrem ersten Ende einen Eingang 2 und an ihrem gegenüberliegenden zweiten Ende einen Ausgang 3 aufweisen, und denen jeweils ein erster Spannungsindikator 4 parallelgeschaltet ist.

Zusätzlich zu den drei spannungsführenden Leitern SL weist die Vorrichtung zwei nichtspannungsführende Leiter NL, nämlich einen Nullleiter N und eine Erdung E auf, wobei der Nullleiter N an seinem ersten Ende einen Eingang 5 und an seinem gegenüberliegenden zweiten Ende einen Ausgang 6 aufweist und dem Nullleiter N ein zweiter Spannungsindikator 7 parallelgeschaltet ist. Die Erdung E weist an ihrem ersten Ende einen Eingang 8 und an ihrem gegenüberliegenden zweiten Ende einen Ausgang 9 auf.

Den ersten und zweiten Spannungsindikatoren 4 und 7 ist jeweils eine separate Sicherung F nachgeschaltet. Jede der Sicherungen F ist mit dem Ausgang 9 der Erdung E verbunden und ist eingerichtet, bei Anliegen einer Spannung zu unterbrechen, z.B. bei einer Spannung von 20 V oder weniger.

Die spannungsführenden sowie die nichtspannungsführenden Leiter mit ihren parallelgeschalteten Spannungsindikatoren 4, 7 und den diesen nachgeschalteten Sicherungen F sind dabei in einem Gehäuse 1 (nicht gezeigt) angeordnet, wobei die Eingänge und die Ausgänge der Leiter Öffnungen des Gehäuses 1 überdecken.

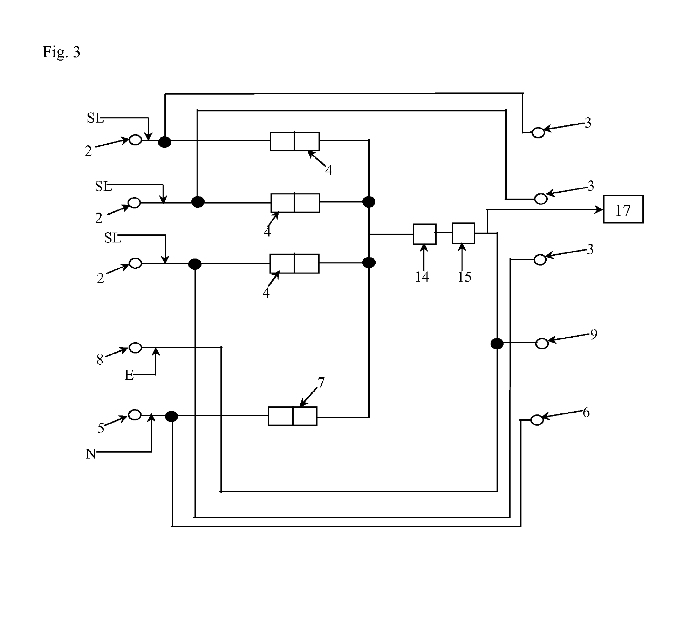

Die Fig. 3 zeigt eine bevorzugte Ausführungsform einer Vorrichtung zum Nachweis von Überspannung mit drei spannungsführenden Leitern SL und zwei nichtspannungsführenden Leitern NL, von denen einer eine Erdung E und der andere ein Nullleiter N ist, wobei den spannungsführenden Leitern SL und dem Nullleiter N jeweils ein Spannungsindikator 4, 7 parallelgeschaltet ist. Die ersten Spannungsindikatoren 4 und der zweite Spannungsindikator 7 sind an ihren Ausgängen jeweils mit einer Einrichtung zur Datenübermittlung 14 verbunden. Die Einrichtung zur Datenübermittlung 14 ist mit einer Einrichtung zur Positionsbestimmung 15 verbunden. Die Einrichtung zur Datenübermittlung 14 und die Einrichtung zur Positionsbestimmung 15 sind eingerichtet, bei Detektieren eines Spannungsimpulses ein Signal an einen Empfänger 17 zu senden, wobei das von der Einrichtung zur Datenübermittlung 14 gesendete Signal ein Identifikationsmerkmal der Vorrichtung, beispielsweise eine Seriennummer, beinhaltet, und das von der Einrichtung zur Positionsbestimmung 15 gesendete Signal Informationen zum Standort der Vorrichtung zum Zeitpunkt der Detektion von Spannung enthält. Für das Senden der Signale weisen die Einrichtung zur Datenübermittlung 14 und die Einrichtung zur Positionsbestimmung 15 jeweils einen Sender auf. Weiterhin weist die Einrichtung zur Positionsbestimmung 15 für die Bestimmung des Standorts der Vorrichtung und des Zeitpunkts des Detektierens von Spannung einen Standortanzeiger, beispielsweise einen GPS-Empfänger oder einen Galileo-Empfänger auf. Vorzugsweise weisen die Einrichtung zur Datenübermittlung 14 und die Einrichtung zur Positionsbestimmung 15 jeweils eine Energieversorgung auf.

### Bezugszeichenliste

- 1: Gehäuse
- 2: Eingang des spannungsführenden Leiters
- 3: Ausgang des spannungsführenden Leiters
- 4: erster Spannungsindikator
- 5: Eingang des Nullleiters
- 6: Ausgang des Nullleiters
- 7: zweiter Spannungsindikator
- 8: Eingang der Erdung
- 9: Ausgang der Erdung
- 14: Einrichtung zur Datenübermittlung
- 15: Einrichtung zur Positionsbestimmung
- 16: computergestützte Datenbank
- 17: Empfänger
- SL: spannungsführender Leiter
- NL: nichtspannungsführender Leiter
- E: Erdung
- N: Nullleiter
- F: Sicherung

## Patentansprüche

1. Vorrichtung zum Nachweis von Überspannung zur Anordnung in einer elektrischen Leitung mit
- zumindest einem spannungsführenden Leiter (SL), der an seinem ersten Ende einen Eingang (2) und an seinem zweiten Ende einen Ausgang (3) aufweist, wobei der spannungsführende Leiter (SL) mit einem ersten Spannungsindikator (4) verbunden ist und
- zumindest einem nichtspannungsführenden Leiter (NL), der an seinem ersten Ende einen Eingang (5) und an seinem zweiten Ende einen Ausgang (6) aufweist,
**dadurch gekennzeichnet, dass** der erste Spannungsindikator (4) parallel zu dem spannungsführenden Leiter (SL) geschaltet ist und der Ausgang des ersten Spannungsindikators (4) mit dem nichtspannungsführenden Leiter (NL) verbunden ist, wobei der erste Spannungsindikator (4) eingerichtet ist, nur oberhalb einer vorbestimmten Grenzspannung einer irreversiblen Änderung zu unterliegen.

2. Vorrichtung nach Anspruch 1, **dadurch gekennzeichnet, dass** der nichtspannungsführende Leiter (NL) ein Nullleiter (N) ist, der mit einem zweiten Spannungsindikator (7) verbunden ist, der parallel zum nichtspannungsführenden Leiter (NL) geschaltet ist, wobei der zweite Spannungsindikator (7) eingerichtet ist, nur oberhalb einer vorbestimmten Grenzspannung einer irreversiblen Änderung zu unterliegen.

3. Vorrichtung nach Anspruch 2, **dadurch gekennzeichnet, dass** der Ausgang des zweiten Spannungsindikators (7) mit dem spannungsführenden Leiter (SL) verbunden ist.

4. Vorrichtung nach Anspruch 1, **dadurch gekennzeichnet, dass** der nichtspannungsführende Leiter (NL) eine Erdung (E) ist.

5. Vorrichtung nach einem der voranstehenden Ansprüche, **gekennzeichnet durch** zwei nichtspannungsführende Leiter (NL), von denen einer ein Nullleiter (N) und der andere eine Erdung (E) ist, wobei der Nullleiter (N) mit einem zweiten Spannungsindikator (7) verbunden ist, der parallel zum Nullleiter (N) geschaltet ist, und wobei der zweite Spannungsindikator (7) eingerichtet ist, nur oberhalb einer vorbestimmten Grenzspannung einer irreversiblen Änderung zu unterliegen..

6. Vorrichtung nach Anspruch 5, **dadurch gekennzeichnet, dass** der Ausgang des ersten und des zweiten Spannungsindikators (4, 7) mit der Erdung (E) verbunden sind.

7. Vorrichtung nach einem der voranstehenden Ansprüche, **dadurch gekennzeichnet, dass** zwischen dem Ausgang zumindest einer der Spannungsindikatoren (4, 7) und der Erdung (E) eine Sicherung (F) angeordnet ist, die mit dem Ausgang (9) der Erdung (E) verbunden ist und eingerichtet ist, bei Kontakt mit Spannung zu unterbrechen.

8. Vorrichtung nach einem der voranstehenden Ansprüche, **dadurch gekennzeichnet, dass** die Grenzspannung 650 V beträgt.

9. Vorrichtung nach einem der voranstehenden Ansprüche, **dadurch gekennzeichnet, dass** die Spannungsindikatoren (4, 7) Gasableiter sind.

10. Vorrichtung nach einem der voranstehenden Ansprüche, **dadurch gekennzeichnet, dass** die Leiter (SL, NL) innerhalb eines Gehäuses (1) angeordnet sind und die Eingänge und die Ausgänge der Leiter (SL, NL) die einzigen Öffnungen des Gehäuses (1) überdecken.

11. Vorrichtung nach einem der voranstehenden Ansprüche, **gekennzeichnet durch** eine Einrichtung zur Datenübermittlung (14) mit einem Sender und einem Speicher, die zumindest einem der Spannungsindikatoren (4, 7) nachgeschaltet ist und eingerichtet ist, bei Detektion einer Spannung Identifikationsmerkmale aus dem Speicher abzurufen und mittels eines Senders ein erstes Signal an einen Empfänger (17) zu übermitteln.

12. Vorrichtung nach einem der voranstehenden Ansprüche, **gekennzeichnet durch** eine Einrichtung zur Positionsbestimmung (15) mit einem Standortanzeiger und einem Sender, die zumindest einem der Spannungsindikatoren (4, 7) nachgeschaltet ist und eingerichtet ist, bei Detektion einer Spannung mittels des Senders ein zweites Signal an einen Empfänger (17) zu übermitteln, wobei das Signal Informationen zum Standort der Vorrichtung zum Zeitpunkt der Detektion von Spannung enthält.Vorrichtung nach einem der Ansprüche 10 bis 14, **dadurch** gekennzeichnet, dass das Gehäuse (1) passend zu einer Verteilerdose, zu einem Telefonanschluss oder zu einem Antennenanschluss geformt ist, wobei die Eingänge der spannungsführenden und nichtspannungsführen Leiter (SL, NL) passend zu den Kontakten der Verteilerdose, des Telefonanschlusses oder des Antennenanschlusses angeordnet sind, und wobei die Ausgänge der spannungsführenden und nichtspannungsführen Leiter (SL, NL) wie die Kontakte der Verteilerdose, des Telefonanschlusses oder des Antennenanschlusses angeordnet sind.

13. System mit einer Vorrichtung nach einem der Ansprüche 11 bis 12, **gekennzeichnet durch** eine computergestützte Datenbank (16), die eingerichtet ist, die von der Einrichtung zur Datenübermittlung (14) gesendeten Identifikationsmerkmale in der computergestützten Datenbank (16) gespeicherten Daten zuzuordnen.

14. Verfahren zum Nachweis einer Überspannung mit den Schritten
- Bereitstellen einer Vorrichtung nach einem der voranstehenden Ansprüche,
- Durchtretenlassen von Spannung durch den spannungsführenden Leiter (SL) und/oder durch den nichtspannungsführenden Leiter (NL),
wobei nur bei Überschreiten der Grenzspannung in einem Leiter (SL, NL) der dazu parallelgeschaltete Spannungsindikator (4, 7) irrreversibel verändert wird,
- Bestimmen der irreversibel veränderbaren Eigenschaft des zumindest einen Spannungsindikators (4, 7),
- Feststellen des Vorliegens oder des Fehlens einer irreversiblen Veränderung zumindest eines Spannungsindikators (4, 7).

15. Verfahren nach Anspruch 14, **dadurch gekennzeichnet, dass** eine am Ausgang des Spannungsindikators (4, 7) angeschlossene Sicherung (F) sperrt.

16. Verfahren nach einem der Ansprüche 14 bis 15, **gekennzeichnet durch** einen Schritt der Bewertung der Feststellung dahingehend, dass das Fehlen einer irreversiblen Veränderung der Eigenschaft zumindest eines Spannungsindikators (4, 7) als Nachweis dafür gewertet wird, dass keine Spannung oberhalb der Grenzspannung **durch** den Spannungsindikator (4, 7) getreten ist, während das Vorliegen einer irreversiblen Veränderung als Nachweis für einen Durchtritt von Spannung oberhalb der Grenzspannung **durch** den Spannungsindikator (4, 7) und für das Anliegen einer Spannung oberhalb der vorbestimmten Grenzspannung in dem mit diesem Spannungsindikator (4, 7) parallelgeschalteten Leiter gewertet wird.

17. Verfahren nach einem der Ansprüche 14 bis 16, **gekennzeichnet durch**
- das Feststellen der Funktionsfähigkeit eines Gerätes, das an dem Ausgang eines Leiters (SL, NL) angeordnet war, und
- die Bestimmung zumindest einer veränderbaren Eigenschaft des Spannungsindikators (4, 7), der mit diesem Leiter (SL, NL) verbunden war, wobei eine Abweichung der zumindest einen Eigenschaft des mit dem Leiter (SL, NL) verbundenen Spannungsindikators (4, 7) von einer Eigenschaft eines Spannungsindikators, **durch** den keine Spannung hindurchgetreten ist, nur in Kombination mit dem Defekt des Gerätes als Nachweis dafür bewertet wird, dass eine oberhalb der Grenzspannung liegende Spannung **durch** den Leiter (SL, NL) hindurchgetreten ist und an dessen Ausgang in das Gerät eingetreten ist.

18. Verfahren nach einem der Ansprüche 14 bis 17, **gekennzeichnet durch**
- das Eintretenlassen von Spannung in eine zumindest einem Spannungsindikator (4, 7) nachgeschaltete Einrichtung zur Datenübermittlung (14), und
- das Abrufen von Identifikationsmerkmalen aus einem Speicher der Einrichtung zur Datenübermittlung (14), und
- das Senden eines Signals **durch** einen Sender der Einrichtung zur Datenübermittlung (14) an einen Empfänger (17),
wobei das Senden des Signals infolge der Detektion eines Spannungsimpulses **durch** die Einrichtung zur Datenübermittlung (14) erfolgt und das Signal Identifikationsmerkmale der Vorrichtung enthält.

19. Verfahren nach einem der Ansprüche 14 bis 18, **gekennzeichnet durch**
- das Eintretenlassen von Spannung in eine zumindest einem Spannungsindikator (4, 7) nachgeschaltete Einrichtung zur Positionsbestimmung (15), und
- das Bestimmen des Standorts der Vorrichtung zum Zeitpunkt der Detektion von Spannung **durch** einen Standortanzeiger,
- das Senden eines Signals **durch** einen Sender der Einrichtung zur Positionsbestimmung (14) an einen Empfänger (17),
wobei das Senden des Signals infolge der Detektion eines Spannungsimpulses **durch** die Einrichtung zur Positionsbestimmung (14) erfolgt und das Signal Informationen zum Standort der Vorrichtung zum Zeitpunkt der Detektion eines Spannungsimpulses enthält.
